# FASCICULE DE BREVET EUROPEEN

(11) **EP 3 346 522 B1**
(45) Date de publication et mention de la délivrance du brevet: **14.08.2019**
(21) Numéro de dépôt: 17209047.4
(22) Date de dépôt: 20.12.2017
(51) Int. Cl.: H01M 10/0585, H01M 2/18, H01M 4/04, H01M 4/66, H01M 10/04, H01M 10/0525, H01M 4/131

(54) **ACCUMULATEUR ELECTROCHIMIQUE, A ARCHITECTURE PLANE OBTENUE EN PARTIE PAR IMPRESSION**
ELEKTROCHEMISCHER AKKUMULATOR MIT EBENEM AUFBAU, DER TEILWEISE DURCH DRUCKVERFAHREN ERZIELT WIRD
ELECTROCHEMICAL ACCUMULATOR, WITH PLANAR ARCHITECTURE OBTAINED IN PART BY PRINTING

(30) Priorité: 05.01.2017 FR 1750102
(43) Date de publication de la demande: 11.07.2018
(73) Titulaire: Commissariat à l'Energie Atomique et aux Energies Alternatives, 75015 Paris (FR)
(72) Inventeur: PERALTA, David, 38000 GRENOBLE (FR); SOLAN, Sébastien, 38170 SEYSSINET PARISET (FR)
(74) Mandataire: Nony

(56) Documents cités:
- EP-A1- 1 675 207
- WO-A2-2005/101973
- FR-A1- 3 007 207
- US-A1- 2015 050 543

## Description

### Domaine technique

La présente invention concerne le domaine des générateurs électrochimiques métal-ion, qui fonctionnent selon le principe d'insertion ou de désinsertion, ou autrement dit intercalation-désintercalation, d'ions métal dans au moins une électrode.

Elle concerne plus particulièrement un accumulateur électrochimique au lithium ou lithium-ion.

L'invention a trait à la réalisation d'une nouvelle architecture d'accumulateur électrochimique métal-ion qui permet de le de miniaturiser, afin de le rendre souple et/ou de pouvoir l'intégrer directement dans des objets, en particulier des appareils électroniques.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Etat de la technique

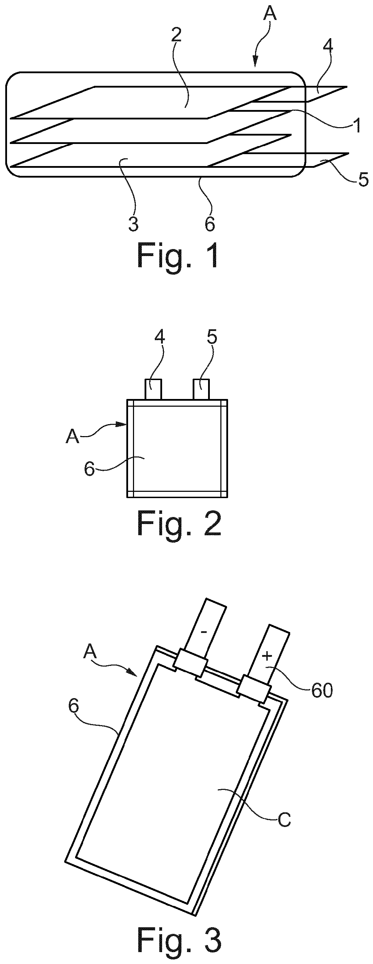

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité à l'eau, l'oxygène et l'azote, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348;
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode lors du processus de charge et inversement lors du processus de décharge, ce qui génère dans ce dernier cas le courant, par déplacement d'électrons dans le circuit extérieur. L'électrolyte est en général un mélange de solvants organiques, par exemple des carbonates dans lesquels est ajouté un sel de lithium typiquement LiPF₆.

L'électrode positive ou cathode 2 est constituée de matériaux d'insertion du cation Lithium qui sont en général composite, comme le phosphate de fer lithié LiFePO₄, l'oxyde de cobalt lithié LiCo02, l'oxyde manganèse lithié, éventuellement substitué, LiMn₂O₄ ou un matériau à base de LiNixMnyCozO2 avec x+y+z = 1, tel que LiNi_{0.33}Mn_{0.33}Co_{0.33}O₂, ou un matériau à base de LiNixCoyAlzO₂ avec x+y+z = 1, LiMn₂O₄, LiNiMnCoO₂ ou l'oxyde de nickel cobalt aluminium lithié LiNiCoAlO₂.

L'électrode négative ou anode 3 est très souvent constituée de carbone graphite ou en Li₄Ti₅O₁₂ (matériau titanate), éventuellement également à base de silicium ou de composite formé à base de silicium.

Une électrode négative d'un accumulateur lithium-ion peut être formée d'un seul alliage, ou d'un mélange d'alliages, ou d'un mélange d'alliage(s) et d'autres matériau(x) d'insertion du lithium (le graphite, sous forme synthétique ou naturel, Li₄Ti₅O₁₂, TiO₂....), éventuellement également à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

Le collecteur de courant 4 connecté à l'électrode positive est en général en aluminium.

Le collecteur de courant 5 connecté à l'électrode négative est en général en cuivre, en cuivre nickelé ou en aluminium.

L'anode et la cathode en matériau d'insertion au Lithium peuvent être déposées en continu selon une technique usuelle sous la forme d'une couche active sur une feuille ou feuillard métallique constituant un collecteur de courant.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement entre 1,5 et 4,2 Volt.

Selon le type d'application visée, on cherche à réaliser soit un accumulateur rigide, soit un accumulateur fin et flexible: l'emballage est alors respectivement soit rigide et constitue en quelque sorte un boitier, soit souple.

Les emballages souples sont usuellement fabriqués à partir d'un matériau composite multicouche constitué d'un empilement de couches d'aluminium recouvertes par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N ° ADR-0N25/AL40/CPP80.

La demanderesse a également proposé dans la demande de brevet FR 2955974 un emballage souple amélioré à partir d'une ou plusieurs feuilles en polyarylethercetone (PAEK).

Un accumulateur souple, communément appelé en anglais «*Thin Film Battery»,* est le plus souvent constitué d'une seule cellule électrochimique.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité peut se détériorer fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial. Le matériau constitutif d'un boitier d'accumulateur Li-ion est usuellement métallique, typiquement un alliage d'aluminium ou en acier inoxydable ou en polymère rigide comme par exemple l'acrylonitrile butadiène styrène (ABS).

L'avantage principal des emballages rigides est ainsi leur étanchéité élevée et maintenue au cours du temps du fait que la fermeture des boitiers est réalisée par soudure, en générale par soudure au laser.

Afin de rendre les éléments électroniques plus intégrables, il convient de réduire au maximum leurs dimensions.

Depuis plusieurs années, les batteries ou accumulateurs suivent cette tendance.

Outre la recherche de miniaturisation des accumulateurs ou batteries, de nouvelles recherches afin de les rendre souples ou encore de les intégrer directement dans des objets. Pour répondre à ces demandes, différentes architectures de batteries sont étudiées. Les deux architectures les plus connues sont l'architecture planaire et l'autre l'architecture à motif interdigité.

Dans la littérature, on trouve ainsi plusieurs demandes de brevet/brevets qui protègent des solutions de nouvelles architectures d'accumulateur/batterie.

La demande de brevet EP1675207 décrit un accumulateur électrochimique comprenant des collecteurs métalliques, un séparateur définissant un motif interdigité avec la formation de cavités pour incorporer les électrodes.

La déposante a ainsi proposé dans la demande de brevet FR 3007207 une architecture d'accumulateur à motif interdigité réalisée par technique d'impression sur un substrat électroniquement isolant.

On a illustré en figures 4 et 5, un exemple de réalisation d'un accumulateur A selon l'enseignement de cette demande de brevet. Cet accumulateur A comprend un substrat isolant électroniquement 7, sur lequel est déposé un premier collecteur de courant 4 dont le motif comprend une pluralité de bandes parallèles reliées par une bande principale et qui est recouvert partiellement d'une couche de matériau actif d'insertion 2. Le premier collecteur 4 revêtu de la couche 2 forme une électrode positive.

Un deuxième collecteur de courant 5 est déposé sur le substrat 7 selon un motif complémentaire et imbriqué dans le motif du premier collecteur de courant 4. Ainsi, les premier et deuxième collecteurs de courant 4, 5 forment un motif interdigité.

Le deuxième collecteur 5 est recouvert partiellement d'une couche de matériau actif d'insertion 3 et forme ainsi une électrode négative.

Les extrémités des collecteurs 4, 5 non recouvertes par les couches de matériau actif définissent les extrémités de connexion électrique vers l'extérieur de l'accumulateur.

Les électrodes positive 2, 4 et négative 3, 5 peuvent présenter la même largeur. La largeur El des électrodes positive 2, 4 et négative 3, 5 est comprise entre 10 et 200 micromètres.

Une couche d'électrolyte 1 est déposée dans les espaces entre électrode positive 2, 4 et électrode négative 3, 5. La distance inter-électrodes E2, ou inter-bandes, définie par le motif interdigité et qui est remplie par l'électrolyte 1 est comprise entre 1 et 50 micromètres.

L'ensemble des composants de cet accumulateur sont réalisés par technique d'impression à haute définition sur le substrat électroniquement isolant 7. Il peut s'agir d'une impression par jet d'aérosol (AJP acronyme anglo-saxon pour « Aérosol Jet Printing ») ou une impression par sérigraphie (« screen printing » en anglais) ou encore une impression à jet d'encre de type goutte à la demande (DOD acronyme pour l'expression anglo-saxonne «Drop On Demand») ou encore à jet continu dévié (CIJ acronyme pour l'expression anglo-saxonne «Continuous Ink Jet»). Dans toutes ces techniques d'impression, les matériaux sous la forme d'une encre constituée de nanoparticules sont propulsés ou déposés sur le support avant de subir un frittage.

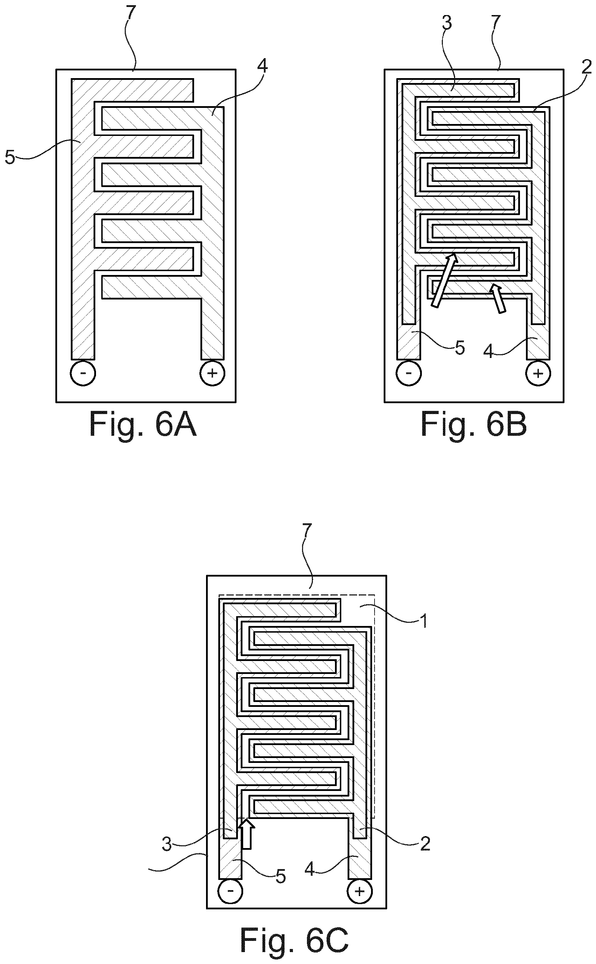

On a illustré schématiquement aux figures 6A à 6C les différentes étapes de réalisation d'un tel accumulateur A.

Les couches formant les collecteurs de courant positif 4 et négatif 5 sont tout d'abord déposées par impression sur le substrat électroniquement isolant 7, en formant le motif interdigité (figure 6A).

Puis, les couches de matériau actif d'insertion respectivement positif 2 et négatif 3 sont imprimées chacune sur leur collecteur 4, 5 en recouvrant les partiellement (figure 6B).

Enfin, une couche d'électrolyte 1 est imprimée qui remplit tous les espaces entre électrode positive 2, 4 et négative 3, 5 à l'exception des extrémités des collecteurs 4, 5 qui forment les extrémités de connexion électrique (figure 6C).

Comparativement à un accumulateur réalisé usuellement par empilement ou bobinage comme décrit en relation avec les figures 1 à 3, un accumulateur du type de celui selon la demande FR 3007207 précitée présente de nombreux avantages parmi lesquels on peut citer:
- l'absence de contraintes sur la densification des matériaux actifs d'insertion puisqu'il est possible de faire un calandrage simultané des deux couches de matériau actif contrairement aux couches enduites sur les feuillards métalliques ;
- l'absence de contraintes sur la pénétration de l'électrolyte puisqu'il n'y a pas à faire l'activation de l'accumulateur par un électrolyte liquide, ce qui est usuellement réalisé pour un accumulateur à empilement, ou réalisé par bobinage, cette étape d'activation par électrolyte liquide pouvant s'avérer relativement lente ;
- la possibilité d'utiliser une large gamme de formulation (solvants) et de matériaux (actifs ou électrolytes). En effet, dans les accumulateurs à empilement ou réalisés par bobinage, il est seulement possible d'imprimer un séparateur en phase organique sur une électrode en phase aqueuse puis seulement une électrode en phase aqueuse sur le séparateur pour éviter de dissoudre le polymère constitutif du séparateur, ce qui limite les formulations de matériaux actifs accessibles ;
- l'ajustement du grammage peut s'effectuer sur la largeur et sur la hauteur des électrodes ;
- les collecteurs de courant imprimés sur un même plan facilitent l'interconnexion électrique avec les systèmes à alimenter ;
- une batterie finale plus fine donc plus flexible ;
- l'absence de limitation sur la dimension des motifs.

Les recherches en cours sur le type d'accumulateurs à motif interdigité comme décrit dans la demande FR 3007207 précitée tendent à créer des accumulateurs avec des densités d'énergie toujours de plus en plus importantes.

Pour cela, il convient d'utiliser des matériaux de cathodes présentant des énergies spécifiques très élevées tels que les oxydes lamellaires de formule Li₁₊ₓNiₐMn_{b}Co_{c}M_{d}O₂ ou encore les matériaux de type spinelle ou autres.

Pour tirer le maximum d'énergie de ces matériaux, il convient de leur faire subir des cyclages à des potentiels élevés. A titre d'exemple, les oxydes lamellaires standard les plus utilisés dans le domaine des batteries à hautes énergies possèdent la formule LiNi_{1/3}Mn_{1/3}Co_{1/3}O₂ et sont utilisés dans des bornes de tension allant de 4,3V à 2,7V.

Les matériaux appelés oxydes lamellaires surlithiés (Li₁₊ₓNiₐMn_{b}Co_{c}O₂) ou encore les spinelles dits 5V (LixM_{0.5}Mn_{1.5}O₄) sont considérés comme les prochaines générations de matériaux à forte densité d'énergie et ces matériaux cyclent respectivement dans les bornes de potentiels comprises entre 4,8V et 2,5V et entre 5V et 3,5V.

Pour des accumulateurs à hautes énergies, réalisées classiquement par empilement ou par bobinage, les collecteurs de courant ne posent pas de problème car l'anode et la cathode peuvent être enduites directement impression sur des feuillards métalliques, en aluminium ou en cuivre en fonction des bornes de potentiels visées.

Lorsque l'on miniaturise les accumulateurs, le collecteur de courant peut alors poser problème. Dans le cas d'une architecture à motif interdigité, comme celui de la demande FR 3007207 précitée, les collecteurs de courant sont obtenus par impression de préférence par jet d'encre comme évoqué ci-dessus.

Actuellement, ces collecteurs imprimés sont obtenus en utilisant des encres de nanoparticules de carbone, d'or ou encore de cuivre.

Pour des applications où le cyclage des matériaux peut être relativement lent, l'utilisation des nanoparticules de carbone peut suffire. Mais, lorsque les régimes de cyclage augmentent, ce type de collecteur peut devenir beaucoup moins performant qu'un collecteur de courant sous la forme d'un feuillard métallique dans des architectures à empilement ou obtenu par bobinage. L'or pose bien entendu le problème de son coût intrinsèque. Le cuivre peut être envisagé comme une très bonne option pour les matériaux dont le cyclage peut être réalisé dans une plage de potentiel ne dépassant pas 3 V.

Néanmoins, les matériaux actifs d'insertion positifs, i.e. ceux formant les cathodes, qui présentent les plus fortes densités d'énergie, nécessitent un cyclage à des potentiels généralement supérieurs à 3V. Ceci est particulièrement préjudiciable car le cuivre n'est pas stable à un potentiel supérieur à 3V.

Par conséquent, dans les batteries réalisées usuellement par empilement ou par bobinage comme décrit en relation avec les figures 1 à 3, les matériaux actifs de cathode sont généralement déposés sur un feuillard d'aluminium. En effet, l'aluminium ne présente pas de problème de stabilité pour des potentiels supérieure à 3V.

Or, à ce jour, il n'est pas possible d'imprimer des collecteurs de courant en aluminium. En effet, les nanoparticules d'aluminium ne sont pas disponibles commercialement et mêmes si elles le devenaient, les températures nécessaires pour fritter ces particules rendraient leur utilisation difficile pour l'impression sur des substrats isolant électroniquement, en particulier des substrats en polymère.

Il existe donc un besoin d'améliorer les accumulateurs au lithium, et plus généralement métal-ion, réalisés au moins en partie par impression sur un substrat isolant électroniquement notamment afin d'augmenter leur densité d'énergie, et ce sans que cela se fasse au détriment de leur compacité.

Le but général de l'invention est de répondre au moins en partie à ce besoin.

### Exposé de l'invention

Pour ce faire, l'invention a pour objet un accumulateur électrochimique métal-ion, selon la revendication 1, comprenant:
- un élément métallique formant un collecteur de courant d'une électrode d'une polarité ;
- une couche de matériau isolant électrique, déposée sur l'élément métallique en définissant un motif d'imbrication,
- une couche formant un collecteur de courant d'une électrode de polarité opposée à celle dont le collecteur de courant est formé par l'élément métallique, la couche de collecteur étant déposée sur le motif d'imbrication de la couche isolante;
- une couche de matériau actif d'électrode, déposée sur l'élément métallique selon un motif au moins en partie imbriquée dans le motif d'imbrication;
- une couche de matériau actif d'électrode de polarité opposée à celle déposée sur l'élément métallique, la couche de polarité opposée étant déposée sur la couche de collecteur selon le motif d'imbrication;
- une couche d'électrolyte déposée au moins dans les espaces entre les deux couches de matériaux actifs de polarité opposée entre elles.

Par « motif d'imbrication », on entend ici et dans le cadre de l'invention, une surface géométrique de la couche isolante à l'intérieur de laquelle au moins une partie d'une surface géométrique d'une autre couche peut s'insérer. Un motif d'interdigitation est un motif particulièrement avantageux comme motif d'imbrication selon l'invention.

Selon un premier mode de réalisation, l'élément métallique est un substrat métallique formé par au moins une partie d'un objet à alimenter électriquement par l'accumulateur. Ce mode a pour avantage de pouvoir intégrer directement l'accumulateur selon l'invention à une partie de l'objet. Par exemple, si l'objet est un téléphone portable dont la coque du boitier est métallique, on peut se servir de cette coque comme élément métallique de l'accumulateur.

Selon un deuxième mode de réalisation, l'accumulateur comprend en outre un substrat en matériau isolant électronique, l'élément métallique étant un feuillard métallique appliqué contre le substrat.

Le substrat électroniquement isolant peut être avantageusement un substrat en polymère choisi parmi le polyéthylène téréphthalate (PET), le polyéthylène (PE), le polypropylène (PP), le polyamide (PA), le polyimide (PI), le polyétheréthercétone (PEEK) ou un substrat en métal recouvert d'une couche isolante électroniquement ou un substrat en un oxyde isolant électrique.

Le feuillard appliqué contre le substrat est de préférence un feuillard d'aluminium.

Ainsi, selon l'invention, on réalise une architecture d'accumulateur obtenue essentiellement par dépôt de couches, de préférence par impression, à l'exception d'un des collecteurs de courant formé par un élément métallique, tel qu'un feuillard qui est lié au substrat isolant électronique en l'appliquant contre, de préférence par technique d'estampage.

L'élément métallique selon l'invention sert à la fois de collecteur de courant pour l'une des électrodes et de support pour toutes les autres couches fonctionnelles du coeur électrochimique de l'accumulateur.

Grâce à l'invention, on peut réaliser un collecteur de courant en aluminium ou tout autre métal stable dans les conditions de potentiel, pour l'une des bornes, notamment la borne positive d'un accumulateur Li-ion. On peut ainsi augmenter la densité d'énergie des accumulateurs à architecture interdigitée car, la mise en oeuvre d'un élément en aluminium ou autre métal stable, permet de revêtir celui-ci avec des matériaux actifs d'insertion à très hautes énergies spécifiques et qui peuvent subir des cycles à des potentiels supérieurs à 3 V.

Autrement dit, on conserve tous les avantages d'un accumulateur à architecture interdigitée, comme décrit dans la demande FR3007207 A1 avec en outre la possibilité d'augmenter considérablement la densité d'énergie et ce sans nuire à l'encombrement de l'accumulateur.

Un autre avantage lié à l'invention est la possibilité d'une utilisation directe de la surface métallique d'un objet comme support et collecteur de courant pour la création de l'accumulateur selon l'invention.

A l'exception du feuillard métallique appliqué contre le substrat, toutes les autres couches (collecteur de courant de polarité opposée à celle du feuillard, matériaux actifs d'insertion, couche d'électrolyte) sont de préférence déposées par technique d'impression, de préférence encore par sérigraphie sur les substrats collecteurs de courant.

D'autres techniques d'impression peuvent être employées telles que la flexographie, l'héliogravure, le spray, le jet d'encre, l'impression par jet d'aérosol... Un avantage important des techniques d'impression est de pouvoir fabriquer des motifs de section variées (carrée, rectangulaire, ronde ou plus complexe) et donc permet d'acquérir une certaine liberté sur le design de l'accumulateur selon l'invention. La sérigraphie peut être privilégiée car elle présente l'avantage de pouvoir déposer une plus grande quantité d'encre en un seul passage, ce qui permet d'obtenir de forts grammages et donc des capacités élevées. De même les cadences de production sont élevées, comparativement à l'enduction qui est le procédé conventionnel utilisé chez les industriels de la batterie, typiquement une vitesse d'impression de 20 à 25 m/s pour la sérigraphie à comparer à une vitesse 10 à 15 m/s pour l'enduction.

Les connexions ou pôles qui émergent de l'emballage de l'accumulateur, pour le branchement de l'accumulateur à un circuit extérieur sont constituées des bandes des collecteurs de courant en lui-même, de préférence en aluminium pour l'électrode positive et en cuivre ou en carbone pour l'électrode négative.

Selon une variante avantageuse, les motifs d'imbrication et imbriqués forment un motif interdigité ou un motif enroulé en spirale.

Le matériau de la couche électriquement isolante est avantageusement choisi parmi un polymère, une céramique, un oxyde isolant électrique, un matériau composite organique-inorganique. Le polymère peut être choisi parmi le polyfluorure de vinylidène (PVDF), le polymétacrylate de méthyl (PMMA), l'alcool polyvinylique (PVA), le polyvinylpyrrolidone (PVP).

L'oxyde isolant peut être l'alumine ou la silice (Si02).

Selon une variante de réalisation, le collecteur de courant formé par l'élément métallique est le collecteur de polarité positive.

Selon un mode de réalisation avantageux, l'accumulateur selon l'invention comprend en outre un emballage encapsulant l'ensemble des éléments de l'accumulateur en laissant dégagées une extrémité de l'élément métallique et une extrémité de la couche de collecteur de courant, destinées à assurer les connexions électriques vers l'extérieur de l'accumulateur.

Un accumulateur particulièrement avantageux selon l'invention comprend:
- un substrat en polymère flexible ;
- un feuillard en aluminium, estampé sur le substrat;
- une couche en polymère définissant le motif d'imbrication;
- une couche en cuivre ou en carbone déposée sur la couche en polymère selon le motif d'imbrication ;
- une couche en matériau d'insertion au lithium de polarité positive, déposée sur le feuillard en aluminium selon le motif au moins en partie imbriquée dans le motif d'imbrication,
- une couche de matériau d'insertion au lithium de polarité négative, déposée sur la couche en cuivre ou en carbone selon le motif d'imbrication;
- une couche d'électrolyte déposée au moins dans les espaces entre couches de matériaux d'insertion au lithium de polarité positive et négative.

L'accumulateur selon l'invention peut être un accumulateur Li-ion, les couches d'électrode étant en matériau d'insertion du lithium.

Par « électrode en matériau d'insertion au Lithium », on entend ici et dans le cadre de l'invention, un motif d'électrode comportant au moins un matériau d'insertion au lithium et au moins un liant en polymère. Eventuellement, le motif d'électrode peut comprendre en plus un conducteur électronique, par exemple des fibres de carbone ou du noir de carbone.

Par « matériau d'insertion au lithium », en particulier pour le motif de couche d'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour le motif de couche d'électrode négative, on entend également un matériau choisi parmi: oxyde de titane lithié ou non, par exemple Li₄Ti₅O₁₂ ou TiO₂. Plus particulièrement, le matériau des motifs d'électrode négative peut être choisi parmi les matériaux carbonés, les oxydes de titane non lithiés et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en graphite et les cathodes en LiFePO₄.

L'invention a également pour objet un procédé de réalisation d'un accumulateur métal-ion, selon la revendication 12, comprenant les étapes suivantes :
a/ mise à disposition d'un élément métallique formant un collecteur de courant d'une électrode d'une polarité ;
b/ dépôt sur l'élément métallique, d'une couche isolante électriquement selon un motif d'imbrication;
c/ dépôt sur la couche isolante électriquement d'une couche formant un collecteur de courant d'une électrode de polarité opposée à celle dont le collecteur de courant est formé par l'élément métallique, la couche de collecteur de courant étant déposée sur le motif d'imbrication de la couche isolante électriquement;
d/ dépôt sur l'élément métallique, d'une couche de matériau actif d'électrode selon un motif au moins en partie imbriquée dans le motif d'imbrication;
e/ dépôt sur la couche de collecteur de courant d'une couche de matériau actif d'électrode de polarité opposée à celle déposée sur l'élément métallique, selon le motif d'imbrication;
f/ dépôt d'une couche d'électrolyte au moins dans les espaces séparant les deux couches de matériau actif de polarité opposée entre elles.

L'étape a/ peut être réalisée avantageusement par estampage d'un feuillard métallique sur un substrat isolant électroniquement.

Avantageusement, les étapes de dépôt b/ à f/ sont réalisées par technique d'impression.

Les avantages de l'architecture de l'accumulateur selon l'invention comparativement aux architectures selon l'état de l'art sont nombreux parmi lesquels on peut citer :
- possibilité d'augmenter considérablement la densité d'énergie d'un accumulateur, en particulier un accumulateur Li-ion et ce sans nuire à son encombrement.
- possibilité d'une utilisation directe de la surface métallique d'un objet comme support et collecteur de courant pour la création de l'accumulateur selon l'invention.

Les applications visées pour l'accumulateur selon l'invention sont nombreuses.

L'invention concerne ainsi plus particulièrement l'utilisation pour alimenter électriquement un appareil électronique portable, l'accumulateur étant intégré dans le boitier de l'appareil.

Une autre utilisation plus générale de l'accumulateur est pour alimenter électriquement tout dispositif électronique avec un emplacement à contraintes de formes et/ou d'espace.

Il peut s'agir de capteurs ou antennes de type RFID (de l'anglais « Radio Frequency Identification ») destinés à être implantés et logés dans l'habitacle d'un véhicule automobile, ou dans le moindre recoin disponible du véhicule, pour la communication d'informations.

### Description détaillée

D'autres avantages et caractéristiques ressortiront mieux à la lecture de la description détaillée, faite à titre illustratif en référence aux figures suivantes parmi lesquelles :
- la figure 1 est une vue schématique en perspective éclatée montrant les différents éléments d'un accumulateur lithium-ion;
- la figure 2 est une vue photographique en perspective montrant un accumulateur lithium-ion avec son emballage souple selon l'état de l'art,
- la figure 3 est une vue en perspective montrant l'extérieur d'un accumulateur lithium-ion avec son emballage souple selon l'état de l'art, avec les bandes de scellage nécessaires au scellage de l'emballe souple et une bande de soudure nécessaire au soudage des collecteurs de courant;
- la figure 4 est une vue schématique de face d'un accumulateur Li-ion réalisé par impression selon le demande de brevet FR3007207 A1;
- la figure 5 est une vue en coupe transversale de la figure 4;
- les figure 6A à 6C sont des vues de face et illustrent les étapes principales de réalisation d'un accumulateur selon les figures 4 et 5 ;
- les figures 7A à 7E des vues de face et illustrent les étapes principales de réalisation d'un exemple d'accumulateur selon l'invention;
- la figure 8 est une vue de face schématique montrant un autre exemple d'accumulateur selon l'invention.

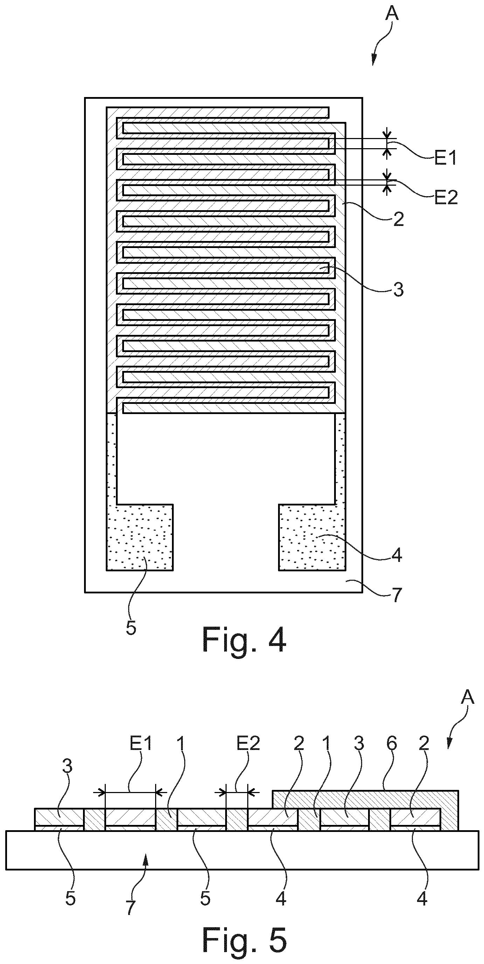

Par souci de clarté, les mêmes références désignant les mêmes éléments d'un accumulateur selon l'état de l'art et d'un accumulateur selon l'invention sont utilisées pour toutes les figures 1 à 8.

On précise que les différents éléments selon l'invention sont représentés uniquement par souci de clarté et qu'ils ne sont pas à l'échelle.

Les figures 1 à 6C ont déjà été commentées en préambule. Elles ne seront donc pas détaillées ci-après.

L'invention est décrite ci-après en référence à un exemple de réalisation d'un accumulateur Li-ion à motif interdigité.

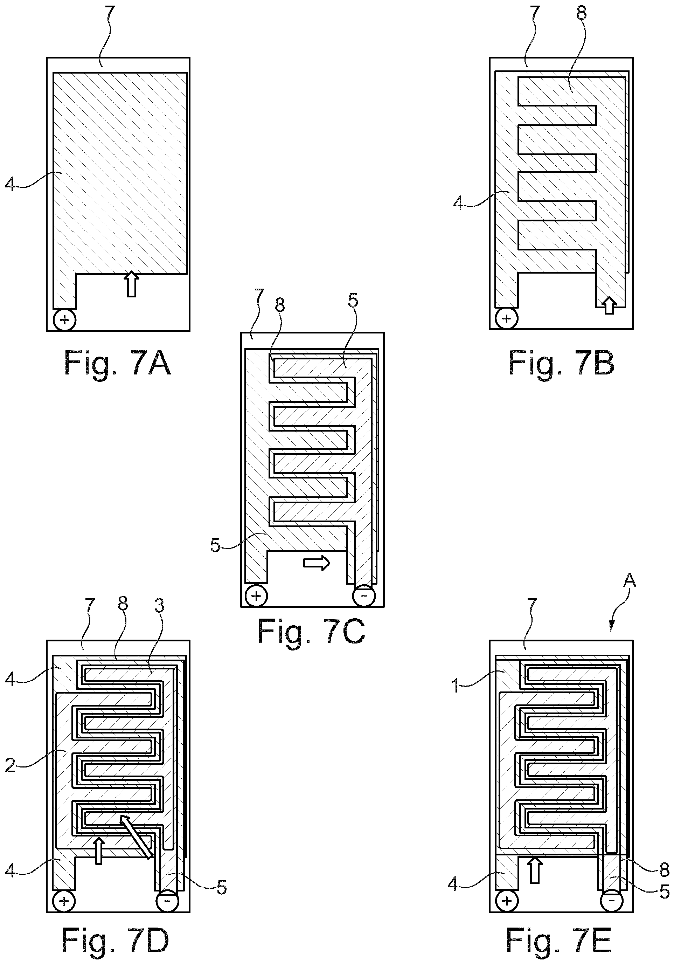

On décrit en référence aux figures 7A à 7E les différentes étapes de réalisation d'un tel accumulateur.
Etape a/ : on met en place tout d'abord un substrat isolant électroniquement 7. Il s'agit avantageusement d'un substrat en polymère choisi parmi le polyéthylène téréphthalate (PET), le polyéthylène (PE), le polypropylène (PP), le polyamide (PA), le polyimide (PI), le polyétheréthercétone (PEEK).
   On vient estamper, par dépôt le cas échéant avec collage, sur le substrat 7 un feuillard métallique 4 en aluminium formant le collecteur de courant de cathode (figure 7A). Comme illustré, le feuillard en aluminium 4 estampé présente une extrémité destinée à constituer la connexion électrique positive.
Etape b/ : on imprime alors sur le feuillard en aluminium 4 une couche isolante électriquement 8 selon un motif dit d'imbrication (figure 7B). Comme illustré, ce motif est formé d'une pluralité de bandes parallèles reliées par une bande principale. Autrement dit, ce motif d'imbrication forme un peigne d'interdigitation.
   La couche isolante 8 est de préférence en polymère, de préférence encore choisi parmi le polyfluorure de vinylidène (PVDF), le polymétacrylate de méthyl (PMMA), l'alcool polyvinylique (PVA), le polyvinylpyrrolidone (PVP).
Etape c/ : on imprime alors sur la couche isolante électriquement 8, une couche en carbone ou en cuivre 5 formant un collecteur de courant négatif (figure 7C). Comme illustré, la couche en carbone ou en cuivre 5 est déposée sur le motif d'imbrication de la couche isolante 7.
Etape d/ : on imprime alors sur le feuillard en aluminium 4 une couche de matériau actif d'électrode positive 2 selon un motif au moins en partie imbriquée dans le motif d'imbrication (figure 7D), c'est-à-dire selon un peigne complémentaire au peigne d'interdigitation déjà réalisé avec les couches isolante 7 et de collecteur de courant 5. Le feuillard d'aluminium 4 recouvert de la couche imprimée 2 forme alors la cathode de l'accumulateur.
Etape e/ : on imprime simultanément à ou en décalage par rapport à l'étape d/, on imprime sur la couche de collecteur de courant 5, une couche de matériau actif d'électrode négative 3, selon le motif d'imbrication (figure 7D).
   Ainsi, après les impressions des couches actives positive 2 et négative 3, le motif interdigité est constitué, seule une extrémité respectivement du feuillard en aluminium 4 estampé sur le substrat 7 et de la couche en cuivre ou en carbone 5 faisant saillie afin de pouvoir réaliser l'interconnexion électrique avec l'extérieur de l'accumulateur A.
Etape f/ : on vient ensuite imprimer une couche d'électrolyte 1 au moins dans les espaces séparant les deux couches positive 2 et négative 3 (figure 7E). Dans l'exemple illustré, la couche d'électrolyte 1 vient recouvrir l'ensemble des composants à l'exception des extrémités de connexion électrique.

On peut ensuite recouvrir toutes les couches fonctionnelles de l'accumulateur par un emballage, de préférence par encapsulation au moyen d'un matériau isolant électriquement et thermiquement.

En réalisant le collecteur de courant positif 4 par estampage d'un feuillard aluminium, l'accumulateur Li-ion conserve tous les avantages d'un accumulateur Li-ion comme décrit dans la demande FR3007207 A1 avec en plus la possibilité d'une densité d'énergie augmentée et ce avec une grande compacité.

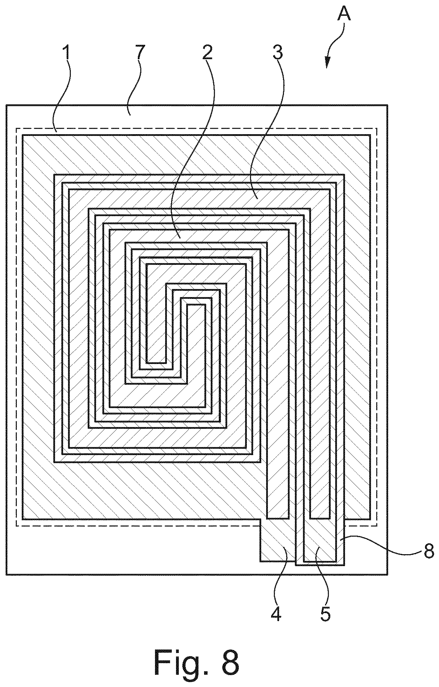

On a illustré en figure 8, une architecture à spirale rectangulaire d'un accumulateur Li-ion qu'il est possible d'obtenir grâce à l'invention.

Un tel accumulateur peut être avantageusement utilisé directement comme partie d'un objet, en particulier d'un appareil électronique dont l'alimentation électrique est assurée par l'accumulateur. Par exemple, la géométrie illustrée en figure 8 pourrait être imprimée à l'intérieur d'une coque de boitier en aluminium d'un téléphone portable, ce qui permettrait de considérablement diminuer l'épaisseur du téléphone.

Dans cette configuration, on peut aussi avantageusement s'affranchir d'un substrat isolant 7 et d'un feuillard métallique 4 en tant que tel, l'élément métallique formant le collecteur de courant étant avantageusement constitué par la coque en aluminium du boitier de téléphone portable.

A titre d'exemple de réalisation, on peut réaliser un accumulateur selon l'invention avec un feuillard d'aluminium 4 revêtue d'une couche imprimée 2, de matériau actif positif dessus, par exemple LiNi_{0.33}Mn_{0.33}Co_{0.33}O₂. A côté de la couche positive 2 une couche de polymère isolant 8 est imprimée en définissant le motif d'imbrication Sur cette couche isolante 8, on imprime une couche de cuivre 5 selon le même motif puis sur cette couche de cuivre 5, on imprime une couche 3 de matériau actif anodique, par exemple en Li₄Ti₅O₁₂.

D'autres variantes et avantages de l'invention peuvent être réalisés sans pour autant sortir du cadre de l'invention.

L'invention n'est pas limitée aux exemples qui viennent d'être décrits; on peut notamment combiner entre elles des caractéristiques des exemples illustrés au sein de variantes non illustrées.

## Revendications

1. Accumulateur électrochimique (A) métal-ion, comprenant:
- un élément métallique (4) de surface plane formant un collecteur de courant d'une électrode d'une polarité;
- une couche de matériau isolant électrique (8), déposée sur l'élément métallique en définissant un motif d'imbrication,
- une couche (5) formant un collecteur de courant d'une électrode de polarité opposée à celle dont le collecteur de courant est formé par l'élément métallique, la couche de collecteur étant déposée sur le motif d'imbrication de la couche isolante;
- une couche de matériau actif d'électrode (2), déposée sur l'élément métallique selon un motif au moins en partie imbriquée dans le motif d'imbrication;
- une couche de matériau actif d'électrode (3) de polarité opposée à celle déposée sur l'élément métallique, la couche de polarité opposée étant déposée sur la couche de collecteur selon le motif d'imbrication;
- une couche d'électrolyte (1) déposée au moins dans les espaces entre les deux couches de matériaux actifs de polarité opposée entre elles.

2. Accumulateur selon la revendication 1, l'élément métallique étant un substrat métallique formé par au moins une partie d'un objet à alimenter électriquement par l'accumulateur.

3. Accumulateur selon la revendication 1, comprenant en outre un substrat (7) en matériau isolant électronique, l'élément métallique étant un feuillard métallique (4) appliqué contre le substrat, le substrat étant de préférence un substrat en polymère choisi parmi le polyéthylène téréphthalate (PET), le polyéthylène (PE), le polypropylène (PP), le polyamide (PA), le polyimide (PI), le polyétheréthercétone (PEEK) ou étant un substrat en métal recouvert d'une couche isolante électroniquement ou étant un substrat en un oxyde isolant électrique.

4. Accumulateur selon la revendication 3, le feuillard appliqué contre le substrat étant un feuillard d'aluminium.

5. Accumulateur selon l'une des revendications précédentes, les motifs d'imbrication et imbriqués formant un motif interdigité ou un motif enroulé en spirale.

6. Accumulateur selon l'une des revendications précédentes, le matériau de la couche électriquement isolante (8) étant choisi parmi un polymère, une céramique, un oxyde isolant électrique, un matériau composite organique-inorganique.

7. Accumulateur selon la revendication 6, le polymère étant choisi parmi le polyfluorure de vinylidène (PVDF), le polymétacrylate de méthyl (PMMA), l'alcool polyvinylique (PVA), le polyvinylpyrrolidone (PVP).

8. Accumulateur selon la revendication 6, l'oxyde isolant étant l'alumine ou la silice (Si02).

9. Accumulateur selon l'une des revendications précédentes, le collecteur de courant formé par l'élément métallique étant le collecteur de polarité positive.

10. Accumulateur selon l'une des revendications précédentes, comprenant en outre un emballage (1) encapsulant l'ensemble des éléments de l'accumulateur en laissant dégagées une extrémité de l'élément métallique et une extrémité de la couche de collecteur de courant, destinées à assurer les connexions électriques vers l'extérieur de l'accumulateur.

11. Accumulateur Li-ion selon l'une quelconque des revendications 3 à 10, comprenant :
- un substrat (7) en polymère flexible ;
- un feuillard (4) en aluminium, estampé sur le substrat;
- une couche en polymère (8) définissant le motif d'imbrication;
- une couche en cuivre ou en carbone (5) déposée sur la couche en polymère selon le motif d'imbrication ;
- une couche en matériau d'insertion au lithium de polarité positive (2), déposée sur le feuillard en aluminium selon le motif au moins en partie imbriquée dans le motif d'imbrication,
- une couche de matériau d'insertion au lithium de polarité négative (3), déposée sur la couche en cuivre ou en carbone selon le motif d'imbrication;
- une couche d'électrolyte (1) déposée au moins dans les espaces entre couches de matériaux d'insertion au lithium de polarité positive et négative.

12. Procédé de réalisation d'un accumulateur électrochimique métal-ion, comprenant les étapes suivantes :
a/ mise à disposition d'un élément métallique formant un collecteur de courant d'une électrode d'une polarité ;
b/ dépôt sur l'élément métallique, d'une couche isolante électriquement selon un motif d'imbrication;
c/ dépôt sur la couche isolante électriquement d'une couche formant un collecteur de courant d'une électrode de polarité opposée à celle, dont le collecteur de courant est formé par l'élément métallique, la couche de collecteur de courant étant déposée sur le motif d'imbrication de la couche isolante électriquement;
d/ dépôt sur l'élément métallique, d'une couche de matériau actif d'électrode selon un motif au moins en partie imbriquée dans le motif d'imbrication;
e/ dépôt sur la couche de collecteur de courant d'une couche de matériau actif d'électrode de polarité opposée à celle déposée sur l'élément métallique, selon le motif d'imbrication;
f/ dépôt d'une couche d'électrolyte au moins dans les espaces séparant les deux couches de matériau actif de polarité opposée entre elles.

13. Procédé selon la revendication 12, l'étape a/ étant réalisée par estampage d'un feuillard métallique sur un substrat isolant électroniquement.

14. Procédé selon la revendication 12 ou 13, les étapes de dépôt b/ à f/ étant réalisées par technique d'impression.

15. Utilisation de l'accumulateur électrochimique métal-ion selon l'une des revendications 1 à 11 pour alimenter électriquement un appareil électronique portable, l'accumulateur étant intégré dans le boitier de l'appareil.

## Patentansprüche

1. Elektrochemischer Metallionen-Akkumulator (A), umfassend:
- ein Metallelement (4) mit ebener Oberfläche, das einen Stromkollektor einer Elektrode mit einer Polarität bildet;
- eine Schicht aus elektrisch isolierendem Material (8), die auf dem Metallelement unter Bildung eines Verschachtelungsmusters aufgebracht ist;
- eine Schicht (5), die einen Stromkollektor einer Elektrode mit entgegengesetzter Polarität zu derjenigen bildet, deren Stromkollektor von dem Metallelement gebildet wird, wobei die Kollektorschicht auf das Verschachtelungsmuster der Isolierschicht aufgebracht ist;
- eine Schicht aus Elektrodenaktivmaterial (2), die auf das Metallelement in einem Muster aufgebracht ist, das zumindest zum Teil mit dem Verschachtelungsmuster verschachtelt ist;
- eine Schicht aus Elektrodenaktivmaterial (3) mit entgegengesetzter Polarität zu der auf das Metallelement aufgebrachten Schicht, wobei die Schicht mit entgegengesetzter Polarität auf die Kollektorschicht in dem Verschachtelungsmuster aufgebracht ist;
- eine Elektrolytschicht (1), die mindestens in den Zwischenräumen zwischen den beiden Aktivmaterial-Schichten mit zueinander entgegengesetzter Polarität aufgebracht ist.

2. Akkumulator nach Anspruch 1, wobei das Metallelement ein Metallsubstrat ist, das von mindestens einen Teil eines Gegenstands gebildet wird, der von dem Akkumulator elektrisch versorgt werden soll.

3. Akkumulator nach Anspruch 1, der außerdem ein Substrat (7) aus elektronisch isolierendem Material umfasst, wobei das Metallelement ein auf dem Substrat anliegender Metallstreifen (4) ist, wobei das Substrat vorzugsweise ein Polymersubstrat, ausgewählt aus Polyethylenterephthalat (PET), Polyethylen (PE), Polypropylen (PP), Polyamid (PA), Polyimid (PI), Polyetheretherketon (PEEK), ist oder ein Substrat aus Metall ist, das mit einer elektronisch isolierenden Schicht bedeckt ist, oder ein Substrat aus einem elektrisch isolierenden Oxid ist.

4. Akkumulator nach Anspruch 3, wobei der auf dem Substrat anliegende Streifen ein Aluminiumstreifen ist.

5. Akkumulator nach einem der vorhergehenden Ansprüche, wobei die Verschachtelungsmuster und verschachtelten Muster ein ineinander verzahntes Muster oder ein spiralförmig aufgewickeltes Muster bilden.

6. Akkumulator nach einem der vorhergehenden Ansprüche, wobei das Material der elektrisch isolierenden Schicht (8) aus einem Polymer, einer Keramik, einem elektrisch isolierenden Oxid, einem organischanorganischen Verbundmaterial ausgewählt ist.

7. Akkumulator nach Anspruch 6, wobei das Polymer aus Polyvinylidenfluorid (PVDF), Polymethylmethacrylat (PMMA), Polyvinylalkohol (PVA), Polyvinylpyrrolidon (PVP) ausgewählt ist.

8. Akkumulator nach Anspruch 6, wobei das isolierende Oxid Aluminiumoxid oder Siliziumdioxid (SiO₂) ist.

9. Akkumulator nach einem der vorhergehenden Ansprüche, wobei der von dem Metallelement gebildete Stromkollektor der Kollektor mit positiver Polarität ist.

10. Akkumulator nach einem der vorhergehenden Ansprüche, der außerdem eine Verpackung (1) umfasst, die die gesamten Elemente des Akkumulators einkapselt, wobei ein Ende des Metallelements und ein Ende der Stromkollektorschicht frei belassen wird, die dazu dienen, die elektrischen Verbindungen nach außerhalb des Akkumulators herzustellen.

11. Li-Ionen-Akkumulator nach einem der Ansprüche 3 bis 10, umfassend:
- ein flexibles Polymersubstrat (7);
- einen auf das Substrat aufgeprägten Aluminiumstreifen (4);
- eine Polymerschicht (8), die das Verschachtelungsmuster bildet;
- eine Schicht aus Kupfer oder Kohlenstoff (5), die auf die Polymerschicht im dem Verschachtelungsmuster aufgebracht ist;
- eine Schicht aus Lithium-Insertionsmaterial mit positiver Polarität (2), die auf den Aluminiumstreifen in dem Muster aufgebracht ist, das zumindest zum Teil mit dem Verschachtelungsmuster verschachtelt ist;
- eine Schicht aus Lithium-Insertionsmaterial mit negativer Polarität (3), die auf die Schicht aus Kupfer oder Kohlenstoff in dem Verschachtelungsmuster aufgebracht ist;
- eine Elektrolytschicht (1), die mindestens in den Zwischenräumen zwischen den Schichten aus den Lithium-Insertionsmaterialien mit positiver und negativer Polarität aufgebracht ist.

12. Verfahren zur Herstellung eines elektrochemischen Metallionen-Akkumulators, umfassend die folgenden Schritte:
a/ Bereitstellen eines Metallelements, das einen Stromkollektor einer Elektrode einer Polarität bildet;
b/ Aufbringen, auf das Metallelement, einer elektrisch isolierenden Schicht in einem Verschachtelungsmuster;
c/ Aufbringen, auf die elektrisch isolierende Schicht, einer Schicht, die einen Stromkollektor einer Elektrode mit entgegengesetzter Polarität zu derjenigen bildet, deren Stromkollektor von dem Metallelement gebildet wird, wobei die Stromkollektorschicht auf das Verschachtelungsmuster der elektrisch isolierenden Schicht aufgebracht wird;
d/ Aufbringen, auf das Metallelement, einer Schicht aus Elektrodenaktivmaterial in einem Muster, das zumindest zum Teil mit dem Verschachtelungsmuster verschachtelt ist;
e/ Aufbringen, auf die Stromkollektorschicht, einer Schicht aus Elektrodenaktivmaterial mit entgegengesetzter Polarität zu der auf das Metallelement aufgebrachten Schicht in dem Verschachtelungsmuster;
f/ Aufbringen einer Elektrolytschicht mindestens in den Zwischenräumen, die die beiden Schichten aus Aktivmaterial zueinander entgegengesetzter Polarität trennen.

13. Verfahren nach Anspruch 12, wobei Schritt a/ durch Aufprägen eines Metallstreifens auf ein elektronisch isolierendes Substrat durchgeführt wird.

14. Verfahren nach Anspruch 12 oder 13, wobei die Aufbringschritte b/ bis f/ durch eine Drucktechnik durchgeführt werden.

15. Verwendung des elektrochemischen Metallionen-Akkumulators nach einem der Ansprüche 1 bis 11 zur elektrischen Versorgung eines tragbaren elektronischen Geräts, wobei der Akkumulator in das Gehäuse des Geräts integriert ist.

## Claims

1. Metal-ion electrochemical accumulator (A), comprising:
- a metal element (4) of flat surface forming a current collector of an electrode of one polarity;
- a layer of electrically insulating material (8), deposited on the metal element, defining an interlocking pattern;
- a layer (5) forming a current collector of an electrode of opposite polarity to the one having the current collector formed by the metal element, the collector layer being deposited on the interlocking pattern of the insulating layer;
- a layer of electrode active material (2), deposited on the metal element according to a pattern at least partly interlocked in the interlocking pattern;
- a layer of electrode active material (3) of opposite polarity to the one deposited on the metal element, the layer of opposite polarity being deposited on the collector layer according to the interlocking pattern;
- a layer of electrolyte (1) deposited at least in the spaces between the two layers of active materials of mutually opposite polarity.

2. Accumulator according to Claim 1, the metal element being a metal substrate formed by at least one part of an object to be electrically powered by the accumulator.

3. Accumulator according to Claim 1, additionally comprising a substrate (7) made of electronically insulating material, the metal element being a metal foil (4) applied against the substrate, the substrate being preferably a polymer substrate chosen from polyethylene terephthalate (PET), polyethylene (PE), polypropylene (PP), polyamide (PA), polyimide (PI), polyether ether ketone (PEEK) or being a metal substrate covered with an electronically insulating layer or being a substrate made of an electrically insulating oxide.

4. Accumulator according to Claim 3, the foil applied against the substrate being an aluminum foil.

5. Accumulator according to one of the preceding claims, the interlocking and interlocked patterns forming an interdigitated pattern or a spirally wound pattern.

6. Accumulator according to one of the preceding claims, the material of the electrically insulating layer (8) being chosen from a polymer, a ceramic, an electrically insulating oxide, and an organic-inorganic composite material.

7. Accumulator according to Claim 6, the polymer being chosen from polyvinylidene fluoride (PVDF), polymethyl methacrylate (PMMA), polyvinyl alcohol (PVA) and polyvinylpyrrolidone (PVP).

8. Accumulator according to Claim 6, the insulating oxide being alumina or silica (Si02).

9. Accumulator according to one of the preceding claims, the current collector formed by the metal element being the collector of positive polarity.

10. Accumulator according to one of the preceding claims, additionally comprising a package (1) that encapsulates all of the elements of the accumulator while leaving free one end of the metal element and one end of the current collector layer, which are intended to provide the electrical connections to the outside of the accumulator.

11. Li-ion accumulator according to any one of Claims 3 to 10, comprising:
- a flexible polymer substrate (7);
- an aluminum foil (4), stamped on the substrate;
- a polymer layer (8) defining the interlocking pattern;
- a copper or carbon layer (5) deposited on the polymer layer according to the interlocking pattern;
- a layer of lithium insertion material of positive polarity (2), deposited on the aluminum foil according to the pattern at least partly interlocked in the interlocking pattern;
- a layer of lithium insertion material of negative polarity (3), deposited on the copper or carbon layer according to the interlocking pattern;
- a layer of electrolyte (1) deposited at least in the spaces between layers of lithium insertion materials of positive and negative polarity.

12. Process for producing a metal-ion electrochemical accumulator, comprising the following steps:
a/ providing a metal element that forms a current collector of an electrode of one polarity;
b/ depositing, on the metal element, an electrically insulating layer according to an interlocking pattern;
c/ depositing, on the electrically insulating layer, a layer forming a current collector of an electrode of opposite polarity to the one having the current collector formed by the metal element, the current collector layer being deposited on the interlocking pattern of the electrically insulating layer;
d/ depositing, on the metal element, a layer of electrode active material according to a pattern at least partly interlocked in the interlocking pattern;
e/ depositing, on the current collector layer, a layer of electrode active material of opposite polarity to the one deposited on the metal element, according to the interlocking pattern;
f/ depositing an electrolyte layer at least in the spaces separating the two layers of active material of mutually opposite polarity.

13. Process according to Claim 12, step a/ being carried out by stamping a metal foil on an electronically insulating substrate.

14. Process according to Claim 12 or 13, the deposition steps b/ to f/ being carried out by a printing technique.

15. Use of the metal-ion electrochemical accumulator according to one of Claims 1 to 11 for electrically powering a portable electronic device, the accumulator being integrated into the casing of the device.
